# FASCICULE DE BREVET EUROPEEN

(11) **EP 1 318 968 B1**
(45) Date de publication et mention de la délivrance du brevet: **19.11.2014**
(21) Numéro de dépôt: 01967450.6
(22) Date de dépôt: 07.09.2001
(51) Int. Cl.: C02F 1/72, C02F 1/78, C02F 11/08, B01J 3/04, B01J 19/24

(54) **PROCEDE DE TRAITEMENT DES DECHETS PAR OXYDATION HYDROTHERMALE.**
VERFAHREN ZUR HYDROTHERMISCHEN BEHANDLUNG VON ABFÄLLEN
METHOD FOR TREATING WASTE BY HYDROTHERMAL OXIDATION

(30) Priorité: 07.09.2000 FR 0011379
(43) Date de publication de la demande: 18.06.2003
(73) Titulaire: Innoveox, 75002 Paris (FR)
(72) Inventeur: CANSELL, François, F-33600 PESSAC (FR)
(74) Mandataire: Neyret, Daniel Jean Marie
(86) Numéro de dépôt international: PCT/FR2001/002782
(87) Numéro de publication internationale: WO 2002/020414

(56) Documents cités:
- DE-A- 3 841 844
- DE-U- 9 321 410
- US-A- 4 380 960
- US-A- 4 721 575
- US-A- 5 252 224
- US-A- 5 582 715
- US-A- 5 770 174

## Description

La présente invention concerne un procédé d'oxydation hydrothermal des déchets, notamment mais non exclusivement des corps organiques contenus dans un effluent aqueux, et une installation destinée la mise en oeuvre dudit procédé.

Des applications de l'invention sont notamment, mais non exclusivement, la transformation des corps organiques contenus en faibles quantités dans des effluents aqueux provenant notamment des industries agro-alimentaires. Ces effluents aqueux sont également susceptibles de contenir des sels dissous. Les corps organiques sont transformés en gaz aptes à être brûlés pour fournir de l'énergie ou en gaz susceptibles d'être libérés dans l'atmosphère sans danger.

Des procédés de transformation de déchets organiques contenus dans une phase aqueuse sont connus. En particulier, il est connu de porter le mélange eau/déchets organiques à des températures et des pressions telles que l'eau dépasse son point critique provoquant ainsi, lorsqu'un corps oxydant est présent dans le mélange, la décomposition des déchets en éléments chimiques simples du type CO₂ et H₂O.

Cependant, lorsque le mélange eau/déchets organiques auquel on a ajouté des quantités d'oxydant aptes à oxyder la totalité des déchets est comprimé et chauffé de façon que l'eau dépasse son point critique, la réaction d'oxydation qui a lieu produit des quantités d'énergie thermique importantes qui peuvent affecter l'intégrité des parois du réacteur dans lequel se déroule la réaction. On observe les mêmes conséquences sur les parois du réacteur lorsque le mélange eau/déchets organiques est préalablement comprimé et chauffé à l'introduction de l'oxydant dans le mélange.

Un tel procédé de transformation de déchets organiques contenus dans une phase aqueuse est décrit dans US 5 252 224. La phase aqueuse dans ce procédé est mise sous pression de telle manière que l'eau soit dans un état supercritique.

On connait également de US 5 582 715, un procédé où des corps organiques contenant un effluent aqueux sont oxydés. L'ajout d'agent oxydant est réalisé par fraction, chacun des ajouts d'oxydant étant associé à une introduction d'eau atomisée afin de décroître la température liée à l'exothermicité de la réaction d'oxydation. Cependant, l'augmentation de la température ne se fait pas progressivement de la zone de chauffage jusqu'au dernier point d'injection.

En revanche, lorsque l'on introduit l'oxydant avant d'avoir commencé à comprimer et à chauffer le mélange, des points chauds peuvent apparaître au sein du réacteur. Ces derniers sont dus essentiellement au fait que la solubilité de l'oxydant et sa capacité calorifique ne sont pas constantes en fonction des conditions de températures et de pressions du mélange. Ainsi, la concentration d'oxydant dissous dans le mélange n'est pas homogène dans le milieu réactionnel et la réaction d'oxydation produit une plus grande quantité d'énergie thermique dans les zones de plus grande concentration en oxydant.

Outre le fait que l'apparition de ces points chauds est susceptible d'affecter les parois du réacteur, la mauvaise répartition de l'oxydant dans le milieu réactionnel conduit à un rendement médiocre de la réaction de dégradation des déchets organiques.

Pour remédier à l'échauffement localisé du réacteur, il a été imaginé d'injecter de l'oxygène et de l'eau simultanément par fractions le long du réacteur, de façon que l'oxygène oxyde la matière organique et que simultanément, l'eau abaisse la température du milieu réactionnel. Cependant, cette solution ne permet pas une dégradation optimale de la matière organique, car la vitesse d'oxydation est diminuée par l'abaissement simultané de la température. En outre, le profil thermique du réacteur présente une courbe alternativement croissante puis décroissante à chaque injection, ce qui diminue le rendement global du réacteur.

Un premier but de la présente invention est de proposer un procédé d'oxydation des composés organiques contenus dans des effluents aqueux permettant de remédier aux inconvénients précités.

Ce but est atteint, conformément à l'invention, du fait que le procédé comprend les étapes suivantes :
- on injecte dans un corps tubulaire présentant une entrée et une sortie ledit effluent aqueux contenant une quantité déterminée de corps organiques, pris dans des conditions de pression et de température initiale,
- on porte ledit effluent aqueux à une pression P1, correspondant au moins à la pression critique dudit effluent aqueux, ladite pression P1 étant supérieure à la pression initiale,
- on porte ledit effluent aqueux à une température T1 supérieure à la température initiale par des moyens de chauffage appliqués dans une zone dudit corps tubulaire,
et en ce qu'on injecte dans ledit corps tubulaire en n points distants les uns des autres, n fractions d'au moins une composition oxydante dont la somme correspond à la quantité de composition oxydante nécessaire à l'oxydation de ladite quantité déterminée de corps organiques, de façon qu'une portion de l'énergie thermique produite par la réaction d'oxydation augmente la température du mélange réactionnel de ladite température T1 à la température T2>T1 selon une courbe croissante entre ladite zone dudit corps tubulaire et le n^{ième} point d'injection, par quoi lesdits corps organiques sont oxydés, ledit mélange réactionnel évoluant continûment d'un état sous-critique liquide au domaine super-critique.

Ainsi, une caractéristique du procédé d'oxydation des corps organiques réside dans l'injection progressive de la composition exclusivement oxydante, par les n points d'injection, dans le milieu réactionnel qui s'écoule dans le corps tubulaire. De la sorte, l'oxydation des corps organiques contenus dans l'effluent aqueux est réalisée progressivement au cours de l'écoulement du mélange réactionnel dans le corps tubulaire et l'énergie thermique produite par la réaction d'oxydation à chaque injection de composition oxydante est partiellement dissipée entre les injections, ce qui évite une production trop intense d'énergie qui endommagerait les parois internes du corps tubulaire. Et, il est nul besoin d'injecter un corps susceptible de refroidir simultanément le milieu réactionnel au cours de la réaction.

Bien évidemment, la composition oxydante est susceptible de contenir d'autres composés, mais qui n'ont aucune action spécifique sur le milieu réactionnel.

Une portion de l'énergie thermique totale produite par l'oxydation de tous les corps organiques est cédée au milieu réactionnel dont la pression P1 est supérieure à la pression critique de l'effluent aqueux, ce qui lui permet d'évoluer progressivement d'un état sous critique en phase liquide jusqu'au domaine supercritique, sans passer par la phase gazeuse. Lorsque le mélange réactionnel est dans le domaine supercritique, la notion de phase disparaît et les corps organiques qui n'ont pas été oxydés entre les injections de composition oxydante, le sont dans ce domaine.

Avantageusement la pression P1 dudit effluent aqueux est supérieure à 23 MPa et la température T1 dudit effluent est comprise entre 370 et 520°K. Dans ce domaine de température et de pression, l'effluent aqueux contenant les corps organiques est dans une phase liquide sous critique où une partie de ces corps est oxydée.

Selon un mode particulier de réalisation de l'invention, ladite portion d'énergie thermique produite par la réaction d'oxydation augmente la température dudit mélange réactionnel à une température T2 inférieure à 800°K. Ainsi, bien que la température du mélange réactionnel soit susceptible d'être supérieure à 800°K après le n^{ième} point d'injection puisque la n^{ième} fraction de composition oxydante réagit avec les corps organiques restants, cette quantité d'énergie n'est pas suffisante pour dégrader la paroi interne du corps tubulaire. Ainsi, une partie substantielle des corps organiques est oxydée avant que le mélange réactionnel atteigne la température T2, et la dernière partie qui est oxydée par la dernière fraction de composition oxydante étant faible, la température du mélange réactionnel sera très légèrement supérieure à T2. En outre, la capacité calorifique de l'eau est maximum pour une température comprise entre 650°K et 700°K, ce qui permet une absorption importante de l'énergie thermique dégagée par la réaction d'oxydation dans cette plage de température que le milieu réactionnel traverse. Les parois du réacteur en seront d'autant moins affectées.

Selon un autre mode particulier de réalisation de l'invention, on injecte trois fractions d'une composition oxydante dans ledit corps tubulaire en trois points espacés les uns des autres. La première fraction est injectée lorsque la température de l'effluent aqueux a atteint la température T1, la deuxième fraction est injectée de façon que l'effluent aqueux atteigne la température T2 et, lorsqu'il l'a atteinte, la troisième fraction est injectée.

De manière avantageuse, on injecte la première fraction de composition oxydante après que ledit effluent aqueux a atteint la température T1, de façon que la réaction d'oxydation des corps organiques ne démarre qu'en aval de ladite zone dudit corps tubulaire où sont appliqués lesdits moyens de chauffage.

Selon encore un autre mode particulier de réalisation de l'invention, ledit corps tubulaire présente une pluralité de portions dont.les sections sont de tailles différentes. Cette configuration permet de ménager alternativement des portions de corps tubulaire plus étroites dans lesquelles on injecte la composition oxydante et des portions plus larges où a lieu la réaction d'oxydation. Ainsi, le temps de séjour du mélange réactionnel dans les portions plus larges est plus important, ce qui permet d'augmenter le temps de réaction et donc son rendement entre chaque injection de composition oxydante.

Selon une disposition avantageuse, une partie de l'énergie thermique produite par ladite oxydation est cédée audit effluent aqueux pris dans les conditions de pression et de température initiales afin de le porter à ladite température T1. De la sorte, il n'est pas nécessaire de prévoir des moyens additionnels de chauffage pour porter ledit effluent aqueux de la température initiale à la température T1, ce qui améliore le bilan énergétique total du procédé conforme à l'invention. Seuls des moyens chauffants de démarrage de faible intensité sont nécessaires.

Préférentiellement, la composition oxydante injectée dans le corps tubulaire est de l'oxygène ce qui permet de transformer les corps organiques à un coût avantageux. Cependant, le peroxyde d'hydrogène peut être utilisé dans certaines situations particulières où les coûts d'approvisionnement sont avantageux où, lorsque les conditions de mise en oeuvre du procédé nécessite une composition oxydante d'une solubilité dans l'eau plus importante.

Selon une disposition particulièrement avantageuse, au moins une des fractions de composition oxydante est constituée d'une composition oxydante de nature différente de celle des autres fractions. Ainsi, par exemple, il est possible de bénéficier des avantages technologique du peroxyde d'hydrogène dans une première partie du réacteur et des avantages économiques de l'oxygène dans la deuxième partie.

Selon un mode de réalisation particulièrement avantageux, le procédé conforme à l'invention comprend en outre les étapes suivantes : on récupère ledit effluent aqueux et les sels qu'il contient à ladite sortie dudit corps tubulaire , on abaisse la pression dudit effluent aqueux de ladite pression P1 à une pression P0, comprise entre la pression atmosphérique et ladite pression P1 de façon à détendre ledit effluent aqueux pour transformer tous les sels à l'état solide et ledit effluent aqueux à l'état de vapeur ; on récupère les sels à l'état solide ; et, on récupère ledit effluent aqueux à l'état de vapeur, par quoi on sépare physiquement ledit effluent aqueux et les sels qu'il contient

Un deuxième but de la présente invention est de proposer une installation destinée à la mise en oeuvre du procédé d'oxydation des corps organiques contenus dans des effluents aqueux. L'installation comprend :
- des moyens pour injecter dans un corps tubulaire, présentant une entrée et une sortie, ledit effluent aqueux contenant une quantité déterminée de corps organiques, pris dans les conditions de pression et de température initiales,
- des moyens pour porter ledit effluent aqueux à une pression P1 supérieure à la pression initiale,
- des moyens de chauffage, appliqués dans une zone dudit corps tubulaire, pour porter ledit effluent aqueux à une température T1, supérieure à la température initiale, et,
- des moyens pour injecter dans ledit corps tubulaire, où ledit effluent aqueux est au moins à la pression P1, en n points distants les uns des autres, n fractions d'une composition oxydante dont, la somme correspond à la quantité d'oxydant nécessaire à l'oxydation de ladite quantité déterminée de corps organiques, de façon qu'une portion de l'énergie thermique produite par la réaction d'oxydation augmente la température du mélange réactionnel de ladite température T1 à la température T2>T1 selon une courbe croissante entre ladite zone dudit corps tubulaire et le n^{ième} point d'injection, par quoi lesdits corps organiques sont oxydés, ledit mélange réactionnel évoluant continûment d'un état en phase sous-critique à un état en phase super-critique.

De façon avantageuse, le corps tubulaire est constitué d'un tube présentant un orifice d'entrée dans lequel est injecté ledit effluent aqueux et un orifice de sortie par lequel s'échappent lesdits corps organiques oxydés. Ledit tube peut être rectiligne lorsque le procédé peut être mis en oeuvre dans un corps tubulaire de faible longueur, mais il peut également être disposé en hélice de façon à réduire les dimensions totales du réacteur.

Préférentiellement, les moyens pour injecter ledit effluent aqueux comprennent une pompe apte à comprimer ledit effluent aqueux à une pression supérieure à 23 MPa, ladite pompe étant reliée audit orifice d'entrée. Ainsi, la pompe qui comprend également un orifice d'admission de l'effluent aqueux et un orifice d'injection sous pression injecte ledit effluent aqueux dans le corps tubulaire. La pression de l'effluent dans le corps tubulaire est relativement constante et supérieure à 23 MPa au moins dans la portion où les réactions d'oxydation ont lieu.

De façon avantageuse, lesdits moyens de chauffage, appliqués dans ladite zone dudit corps tubulaire comportent un générateur thermoélectrique solidaire dudit corps tubulaire. Ainsi, le générateur thermoélectrique fixé sur le corps tubulaire permet de préchauffer l'effluent aqueux qui est injecté.

Préférentiellement, lesdits moyens de chauffage, appliqués dans ladite zone dudit corps tubulaire, comportent un échangeur thermique solidaire dudit corps tubulaire dont la source chaude est fournie par une partie de l'énergie thermique produite par ladite réaction d'oxydation. En effet, la réaction d'oxydation produit de l'énergie thermique dont au moins une portion peut accroître la température du milieu réactionnel et dont une partie peut être récupérée et utilisée pour porter l'effluent aqueux à la température T1.

Selon un mode particulier de réalisation de l'invention, les moyens pour injecter une fraction d'oxydant dans ledit corps tubulaire comprennent un injecteur à débit variable débouchant dans ledit corps tubulaire, la pression en oxydant dans ledit injecteur étant supérieure à P1. L'injecteur peut être alimenté en composition oxydante par une pompe apte à comprimer la composition oxydante à une pression supérieure à P1, ou par un réservoir contenant la composition sous une pression également supérieure à P1.

Selon un mode particulier de mise en oeuvre de l'invention, les moyens pour injecter l'oxydant dans ledit corps tubulaire comportent trois injecteurs débouchant dans ledit corps tubulaire, espacés les uns des autres.

Avantageusement, le premier point d'injection de la composition oxydante est situé entre ledit orifice de sortie dudit corps tubulaire et ladite zone dudit corps tubulaire où sont appliqués lesdits moyens de chauffage, à proximité de cette dernière.

Selon un mode particulier de mise en oeuvre, l'installation d'oxydation comprend en outre : des moyens pour récupérer ledit effluent aqueux et les sels qu'il contient à ladite sortie dudit corps tubulaire, des moyens pour abaisser la pression dudit effluent aqueux de ladite pression P1 à une pression P0, comprise entre la pression atmosphérique et ladite pression P1 de façon à détendre ledit effluent aqueux pour transformer tous les sels à l'état solide et ledit effluent aqueux à l'état de vapeur ; des moyens pour récupérer les sels à l'état solide ; et, des moyens pour récupérer ledit effluent aqueux à l'état de vapeur, par quoi on sépare physiquement ledit effluent aqueux et les sels qu'il contient.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique de l'installation destinée à la mise en oeuvre du procédé selon l'invention, comportant n point d'injection de la composition oxydante,
- la Figure 2, est une vue du profil thermique du milieux réactionnel en fonction des points d'injection en composition oxydante correspondant à la vue schématique de la Figure 1,
- la Figure 3 est une vue schématique de l'installation destinée à la mise en oeuvre du procédé conforme à l'invention selon un mode particulier de réalisation où corps tubulaire comporte trois points d'injection, et,
- la Figure 4 est une vue du profil thermique du milieux réactionnel en fonction des points d'injection correspondant à la vue schématique de l'installation représentée dans la Figure 3.

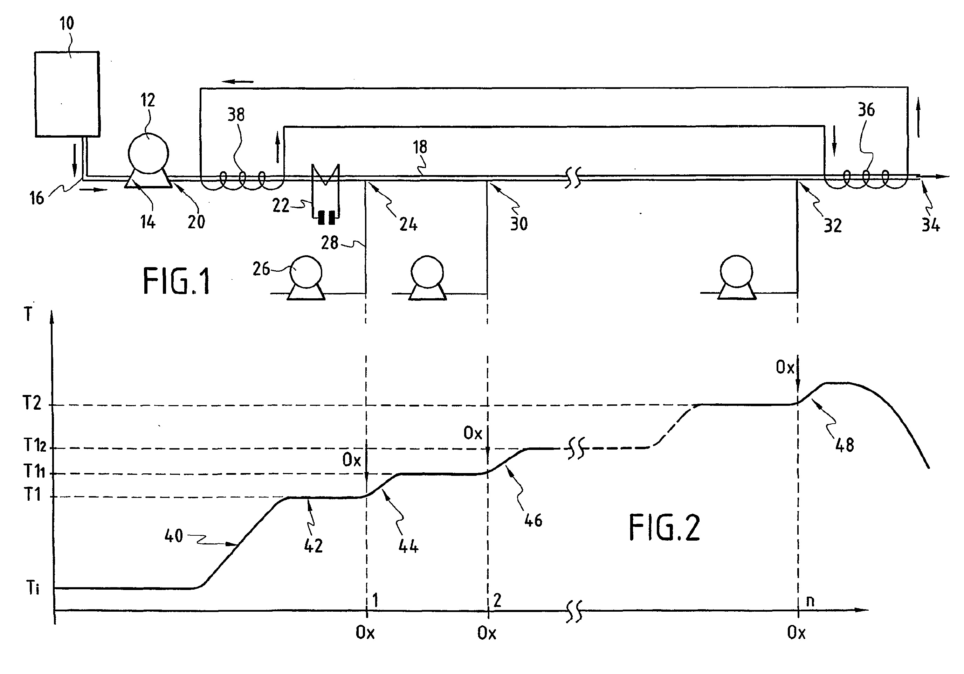

On se référera à la Figure 1 pour décrire l'installation de mise en oeuvre du procédé d'oxydation des corps organiques contenus dans l'effluent aqueux.

L'effluent aqueux contenant les corps organiques à transformer est stocké en amont de l'installation de mise en oeuvre du procédé dans un réservoir 10. Les effluents aqueux sont généralement constitués par des boues industrielles ou urbaines, ou par des eaux issues de procédés industriels.

Une pompe 12, dont l'orifice d'admission 14 est relié par une canalisation 16 à l'extrémité inférieure du réservoir 10, est apte à pomper l'effluent aqueux et à l'injecter sous pression dans un corps tubulaire 18 au niveau de son orifice d'entrée 20. La pompe 12 est susceptible d'injecter l'effluent aqueux dans le corps tubulaire 18 sous une pression supérieure à 22 MPa qui correspond sensiblement à la pression critique de l'eau.

Le corps tubulaire 18 est muni d'un générateur thermoélectrique 22 qui entoure au moins partiellement la paroi externe du corps tubulaire à proximité de l'orifice d'entrée 20 dans lequel est injecté l'effluent aqueux. Le générateur thermoélectrique 22 est constitué d'une résistance chauffante apte à produire suffisamment d'énergie thermique pour élever la température de l'effluent aqueux qui traverse le corps tubulaire 18.

Il va de soi que tout autre moyen apte à produire de l'énergie thermique est susceptible d'être utilisé, en particulier des moyens fonctionnant au gaz ou autres combustibles.

Cet apport énergétique à l'effluent aqueux est nécessaire au démarrage de la réaction d'oxydation des corps organiques qui a lieu dès l'injection d'une première fraction de composition oxydante au point d'injection 24. Ce point d'injection 24 est situé dans le corps tubulaire 18 en aval du générateur thermoélectrique 22. Dans un mode de réalisation particulier l'injection de la première fraction de composition oxydante est réalisée en amont des moyens de chauffage après l'orifice d'entrée du corps tubulaire de façon à solubiliser une partie de composition oxydante dans la phase aqueuse à la température initiale.

Au point d'injection 24, un injecteur (non représenté) traverse la paroi du corps tubulaire 18 et débouche dans la lumière de ce dernier. L'injecteur est relié à une pompe 26 ou à un réservoir (non représenté) au moyen d'une conduite 28. La pompe 26 ou le réservoir est apte à délivrer une fraction de composition oxydante sous une pression supérieure à la pression de l'effluent circulant de le corps tubulaire 18. En effet, cette condition est nécessaire pour que l'oxydant soit injecté dans le corps tubulaire 18.

La composition oxydante peut être constituée de toute substance apte à arracher des électrons aux corps organiques. L'oxydant le moins coûteux est l'oxygène et il aisé de l'injecter au moyen d'un injecteur. D'autres oxydants sont susceptibles d'être utilisés comme le peroxyde d'hydrogène ou comme l'acide nitrique qui présente l'intérêt de dégrader les oxydes d'azote et d'obtenir de l'eau et de l'azote.

Un deuxième point d'injection 30 de la composition oxydante situé à proximité du premier point d'injection 24, en aval, permet l'injection d'une deuxième fraction de la composition oxydante. Les moyens mis en oeuvre pour injecter la composition oxydante sont identiques aux moyens mis en oeuvre pour réaliser l'injection au premier point 24.

Le nombre de fractions de composition oxydante à injecter dans le corps tubulaire 18 est variable en fonction de la concentration en corps organiques présents dans l'effluent aqueux, de la quantité d'oxydant nécessaire à l'oxydation de tous les corps organiques et en fonction de la géométrie du corps tubulaire. On décrira plus en détails dans la suite de la description un mode de réalisation particulier de l'invention dans lequel l'installation comprend trois points d'injection en composition oxydante.

Selon une disposition avantageuse, lorsque l'on augmente la température du milieu réactionnel après l'injection de la première fraction d'oxydant, on utilise au moins deux types de composition oxydante. Le peroxyde d'hydrogène est injecté en premier lieu compte tenu de son fort pouvoir oxydant puis des fractions d'oxygène sont injectées dans les autres points d'injection. La réaction ayant démarrée, l'oxygène peut réagir de façon optimale. Selon ce mode de mise en oeuvre, le bilan économique du réacteur est amélioré car l'oxygène est moins coûteux que le peroxyde d'hydrogène.

Conformément à la Figure 1, l'installation comporte un dernier point d'injection 32 de la composition oxydante nommé n^{ième} point d'injection.

Afin que la réaction d'oxydation soit sensiblement complète, c'est-à-dire que l'ensemble des corps organiques soit oxydé, il est nécessaire que la quantité d'oxydant injectée dans l'effluent aqueux soit au moins égale aux quantités d'oxydant correspondant à la stoechiométrie de la réaction d'oxydation des corps organiques. Ainsi, la somme des fractions de composition oxydante injectées dans le corps tubulaire 18 est au moins égale à la quantité d'oxydant stoechiométrique de la réaction d'oxydation d'une quantité donnée d'effluent aqueux. Bien évidemment, le procédé d'oxydation a lieu en continu et le raisonnement qui est tenu pour des quantités données peut être transposé au fonctionnement continu en utilisant des mesures de débits.

Lorsque la réaction est complète et que les corps organiques ne comportent que des composés à base de carbone et d'oxygène, les produits d'oxydation sont constitués de dioxyde de carbone et d'eau. Ces produits d'oxydation sont libérés à l'extrémité du corps tubulaire 18 au niveau d'un orifice de sortie 34.

Le procédé selon l'invention permet de minéraliser une charge organique contenue dans un effluent aqueux pour obtenir de l'eau et du dioxyde de carbone, par exemple. Dans ce cas, les produits de réaction pourront parfaitement être libérés dans l'atmosphère sans dommage pour l'environnement, ou récupérés pour être utilisés comme réactif si la teneur en dioxyde de carbone est suffisante.

Les produits de la réaction d'oxydation des corps organiques pourront également être libérés dans l'atmosphère si par exemple ils contiennent de l'azote issu de la dégradation des oxyde d'azote par de l'acide nitrique. En revanche si les corps organiques contiennent du chlore, le chlorure d'hydrogène provenant de la réaction devra être récupéré par transformation chimique.

Comme il sera décrit plus en détails dans la suite de la description, le corps tubulaire est a priori à sa température maximale dans la zone située après le n^{ième} point d'injection. Ainsi, il est possible de récupérer cette énergie thermique au moyen d'un premier échangeur 36 situé dans ladite zone où la température est maximale pour la transférer en amont du corps tubulaire 18 au moyen d'un deuxième échangeur 38. Cette énergie thermique transférée à proximité de l'orifice d'entrée 20 du corps tubulaire 18 permet de suppléer ou de remplacer le générateur thermoélectrique nécessaire au préchauffage de l'effluent aqueux. Cette configuration présente un intérêt économique en diminuant la quantité d'énergie nécessaire à la mise en oeuvre du procédé.

Après avoir décrit les éléments constitutifs de l'installation nécessaire à la mise en oeuvre du procédé conforme à l'invention en se référant à la Figure 1, on décrira maintenant, en référence à la Figure 2, le procédé d'oxydation des corps organiques présents dans l'effluent et le profil thermique du milieux réactionnel. Cette dernière est située à l'aplomb du dispositif de la Figure 1 afin que le profil thermique du milieu réactionnel corresponde aux différentes portions du réacteur tubulaire 18.

L'effluent aqueux est tout d'abord comprimé au moyen de la pompe 12 avant d'être injecté sous une pression supérieure à 22 MPa dans l'orifice d'entrée 20 du corps tubulaire 18. La compression, qui permet d'élever la température de l'effluent aqueux, est suppléée par le deuxième échangeur thermique 38, si l'installation est en régime de fonctionnement normal ou par le générateur thermoélectrique 22 si l'installation est en régime transitoire. Le milieu réactionnel initialement à la température Ti est ainsi porté à la température T1 suivant une pente 40 conformément au profil thermique de la Figure 2.

La température T1 est comprise entre 370 et 520°K alors que la pression du milieu réactionnel est maintenue constante, ce qui permet de conserver le milieu réactionnel en phase liquide. Ce dernier conserve une température constante T1 pendant une période transitoire correspondant au plateau 42.

Ensuite, on injecte une première fraction de la composition oxydante au premier point d'injection 24 et la température du milieu réactionnel augmente selon la pente 44 pour atteindre la température T11. En effet, l'oxydation des corps organiques par la composition oxydante est exothermique, et, par conséquent cède de l'énergie au milieu réactionnel.

Une deuxième fraction de la composition oxydante est injectée au deuxième point d'injection 30, produisant de l'énergie apte à augmenter la température à une valeur T12 selon la pente 46.

La même opération est répétée autant de fois que nécessaire en prenant soin de maîtriser la température du milieu réactionnel par l'injection contrôlée des fractions de composition oxydante.

Avant l'injection de la n^{ième} fraction d'oxydant dans le corps tubulaire 18 au point d'injection 32, la température du milieu réactionnel ne doit pas être supérieure à la température T2 qui est inférieure à 800°K. En effet, dans le cas contraire, les risques de dégradation de la paroi interne du corps tubulaire 18 sont importants, puisque la n^{ième} et dernière injection augmente encore la température du milieu réactionnel selon une pente 48.

La dernière injection de composition oxydante permet la dégradation des corps organiques de l'effluents aqueux qui n'ont pas été dégradés durant les étapes précédentes. Afin d'assurer un rendement maximal de la réaction d'oxydation, la somme des n fractions de composition oxydante est sensiblement supérieure à la quantité stoechiométrique nécessaire. Bien évidemment, le procédé étant continu, c'est la somme des débits des fraction de composition oxydante par rapport au débit de l'effluent aqueux dans le corps tubulaire 18 qui correspond à un rapport sur-stoechiométrique.

Par ailleurs, la capacité calorifique de l'eau étant maximale pour une température sensiblement égale à 670°K, de façon avantageuse une fraction importante de composition oxydante est injectée dans un intervalle de température du milieu réactionnel comprenant cette valeur de 670°K. En effet, puisque la capacité calorifique de l'eau est maximale à cette valeur de la température, l'énergie thermique produite par la réaction d'oxydation est d'autant mieux absorbée, ce qui limite l'augmentation de la température du milieux réactionnel et donc la dégradation de la paroi interne du corps tubulaire 18.

En outre, lorsque la composition oxydante est de l'oxygène, elle est soluble dans la phase liquide de l'effluent aqueux pour toutes les injections. Cette particularité intéressante permet d'éviter les points chauds dans le corps tubulaire. En effet, la totale solubilité de l'oxygène dans le milieu réactionnel permet une répartition homogène et instantanée de l'oxydant, ce qui produit une augmentation thermique de l'ensemble du milieu réactionnel puisque les réactions démarrent sensiblement au même instant. A l'inverse, une mauvaise solubilité de l'oxydant induit des réactions localisées au sein du milieux réactionnel et donc des points chauds.

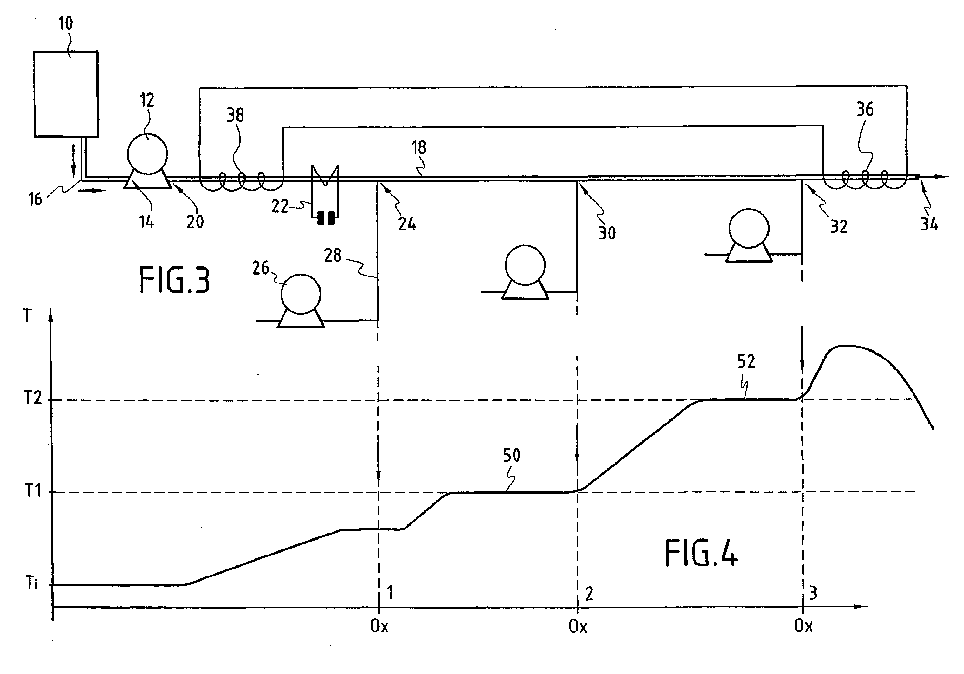

On se référera aux Figures 3 et 4 pour décrire un mode particulier de réalisation comprenant trois points d'injection de trois fractions de composition oxydante.

On retrouve sur les Figure 3 et 4 l'installation conforme à l'invention et le profil thermique qui lui est associé. L'effluent aqueux est injecté sous pression à travers l'orifice d'entrée 20. Les moyens de préchauffage ainsi que l'injection de la première fraction de composition oxydante au point d'injection 24 permettent au milieu réactionnel d'atteindre la température T1 pendant une période transitoire correspondant au plateau 50. L'injection de la deuxième fraction de composition oxydante au point d'injection 30 produit une augmentation de la température à une valeur T2 correspondant au plateau 52. Ensuite, la dernière injection, qui permet l'oxydation des corps organiques n'ayant pas encore réagit, élève la température du milieu réactionnel à une température sensiblement supérieure à T2. Bien évidemment, les valeurs de T1 et de T2 sont ici les mêmes que les valeurs T1 et T2 mentionnées sur les Figures 1 et 2.

Selon un autre mode de réalisation particulier, non représenté, en conservant le principe décrit ci-dessus selon lequel on injecte trois fractions d'oxydant, l'injection de la première fraction est réalisée à un point d'injection situé dans le corps tubulaire en amont des moyens de préchauffage à proximité de l'orifice d'entrée du corps tubulaire. Ainsi, la composition oxydante constitue avec l'effluent aqueux contenant les corps organiques un milieu réactionnel dont la température est sensiblement égale à la température initiale de l'effluent aqueux. Les moyens de préchauffage permettent à la réaction d'oxydation de démarrer dès la première montée en température du milieu réactionnel qui est elle-même produite par la réaction.

Selon encore un mode de réalisation non représenté, on injecte uniquement deux fractions de composition oxydante. Cette configuration est avantageuse lorsque la concentration en corps organiques dans l'effluent aqueux est faible.

Un exemple particulier de réalisation de l'invention est donné à titre indicatif dans la description qui va suivre.

Le corps tubulaire ou réacteur comporte quatre point d'injection et un préchauffeur qui permet de porter la température de l'effluent aqueux à une température de 425°K.

L'effluent à traiter est constitué d'un mélange de glucose et de méthanol contenant 3,9% en poids de glucose et 4,9% de méthanol dans une phase aqueuse. Pour d'oxyder totalement ce mélange, la quantité d'oxygène nécessaire est de 88,9 g/l; Cette quantité est appelée "demande chimique en oxygène" soit, plus usuellement, DCO. La quantité ici injectée correspond à une stoechiométrie de 1,1.

Le débit de l'effluent dans le réacteur est de 1 kg/heure à une pression de 25 MPa.

Le tableau ci-dessous représenté comporte la mesure de la longueur du réacteur en mètre, le point 0 étant sensiblement le point d'injection de l'effluent aqueux, la position des injections des fractions d'oxygène et la température correspondante du réacteur.

| Débits d'oxygène en g/l | Position en mètres | Température en °K |
|---|---|---|
| | 0 | 298 |
| | 3 | 425 |
| 18 | 4 | 423 |
| | 5 | 477 |
| 25 | 6 | 525 |
| | 7 | 570 |
| 25 | 8 | 633 |
| | 9 | 650 |
| 25 | 10 | 679 |
| | 11 | 695 |
| | 12 | 825 |
| | 13 | 854 |
| | 14 | 849 |
| | 16 | 792 |

L'exemple ci-dessus est nullement limitatif, et on ne sortirait pas du cadre de l'invention en traitant toute autre composition d'effluent au moyen d'un oxydant différent et d'une installation comprenant un nombre différent de points d'injection.

Selon un autre aspect, l'installation d'oxydation comprend des moyens, non représentés, pour récupérer les sels contenus dans l'effluents aqueux.

Ainsi, le corps tubulaire est prolongé à sa sortie par un second corps tubulaire dans lequel l'effluent aqueux et les sels qu'il contient se déversent à une température comprise entre 750 et 900°K, par exemple 820°K. Le second corps tubulaire comporte une buse d'entrée dans laquelle de l'eau est susceptible d'être injectée pour refroidir l'effluent aqueux à une température comprise entre 700 et 800°K, par exemple 750° K.

Le second corps tubulaire débouche dans un réceptacle formant trémie par l'intermédiaire d'une buse de détente. La pression interne du réceptacle étant comprise entre la pression atmosphérique et ladite pression P1, par exemple 1MPa. De la sorte, l'effluent aqueux contenant les sels se détend, tous les sels sont transformés dans un état solide, et l'effluent aqueux à l'état de vapeur. On peut ainsi récupérer les sels à l'extrémité inférieur de la trémie et la vapeur à une autre sortie ménagée à cet effet à une température comprise entre 500 et 600°K, par exemple 550°K.

En outre, de façon particulièrement avantageuse la sortie du corps tubulaire et/ou le second corps tubulaire comporte un décolmateur à ultrasons, appliqué sur les parois externe, permettant de décolmater les sels qui sédimentent sur la paroi interne des corps tubulaires et qui risquent de les obstruer au cours du procédé d'oxydation.

## Revendications

1. Procédé d'oxydation des corps organiques contenus dans un effluent aqueux, ledit effluent aqueux étant susceptible de contenir des sels,
**caractérisé en ce qu'**il comprend les étapes suivantes :
- on injecte dans un corps tubulaire (18) présentant une entrée et une sortie ledit effluent aqueux contenant une quantité déterminée de corps organiques, pris dans des conditions de pression et de température initiale,
- on porte ledit effluent aqueux à une pression P1, correspondant au moins à la pression critique dudit effluent aqueux, ladite pression P1 étant supérieure à la pression initiale,
- on porte ledit effluent aqueux à une température T1 supérieure à la température initiale par des moyens de chauffage (38, 22) appliqués dans une zone dudit corps tubulaire,
et **en ce qu'**on injecte dans ledit corps tubulaire en n points (24, 30, 32) distants les uns des autres, n fractions d'au moins une composition oxydante, dont la somme correspond à la quantité de composition oxydante nécessaire à l'oxydation de ladite quantité déterminée de corps organiques, de façon qu'une portion de l'énergie thermique produite par la réaction d'oxydation augmente la température du mélange réactionnel de ladite température T1 à la température T2>T1 selon une courbe croissante (44, 46) entre ladite zone dudit corps tubulaire et le n^{ième} point d'injection, par quoi lesdits corps organiques sont oxydés, ledit mélange réactionnel évoluant continûment d'un état sous-critique liquide au domaine super-critique.

2. Procédé d'oxydation selon la revendication 1 **caractérisé en ce que** ladite pression P1 dudit effluent aqueux est supérieure à 23 MPa et **en ce que** la température T1 dudit effluent est comprise entre 370 et 520°K.

3. Procédé d'oxydation selon la revendication 1 ou 2 **caractérisé en ce que** ladite portion d'énergie thermique produite par la réaction d'oxydation augmente la température dudit mélange réactionnel une température T2 inférieure à 800°K.

4. Procédé d'oxydation selon l'une quelconque des revendications 1 à 3 **caractérisé en ce que** l'on injecte trois fractions d'une composition oxydante dans ledit corps tubulaire (18) en trois points (24, 30, 32) espacés les uns des autres.

5. Procédé d'oxydation selon l'une quelconque des revendications 1 à 4 **caractérisé en ce qu'**on injecte la première fraction de composition oxydante après que ledit effluent aqueux a atteint la température T1.

6. Procédé d'oxydation selon l'une quelconque des revendications 1 à 5 **caractérisé en ce que** ledit corps tubulaire (18) présente une pluralité de portions dont les sections sont de tailles différentes.

7. Procédé d'oxydation selon l'une quelconque des revendications 1 à 6 **caractérisé en ce qu'**en outre une partie de l'énergie thermique produite par ladite oxydation est cédée audit effluent aqueux pris dans les conditions de pression et de température initiales afin de le porter à ladite température T1.

8. Procédé d'oxydation selon l'une quelconque des revendications 1 à 7, **caractérisé en ce que** l'injection des n fractions de composition oxydante dans le corps tubulaire est effectuée sans injection d'un corps susceptible de refroidir simultanément le milieu réactionnel.

9. Procédé d'oxydation selon l'une quelconque des revendications 1 à 8 **caractérisé en ce que** la composition oxydante est de l'oxygène.

10. Procédé d'oxydation selon l'une quelconque des revendications 1 à 8 **caractérisé en ce que** la composition oxydante est du peroxyde d'hydrogène.

11. Procédé d'oxydation selon l'une quelconque des revendications 1 à 8 **caractérisé en ce qu'**au moins une des fractions de composition oxydante est constituée d'une composition oxydante de nature différente de celle des autres fractions.

12. Procédé d'oxydation selon l'une quelconque des revendications 1 à 11, **caractérisé en ce qu'**il comprend en outre les étapes suivantes :
- on récupère ledit effluent aqueux et les sels qu'il contient ladite sortie dudit corps tubulaire,
- on abaisse la pression dudit effluent aqueux de ladite pression P1 à une pression P0, comprise entre la pression atmosphérique et ladite pression P1 de façon à détendre ledit effluent aqueux pour transformer tous les sels à l'état solide et ledit effluent aqueux à l'état de vapeur ;
- on récupère les sels à l'état solide ; et,
- on récupère ledit effluent aqueux à l'état de vapeur, par quoi on sépare physiquement ledit effluent aqueux et les sels qu'il contient.

## Patentansprüche

1. Verfahren zur Oxidation von organischen Stoffen, die in einem wasserhaltigen Abwasser enthalten sind, wobei das wasserhaltige Abwasser in der Lage ist Salze zu enthalten, **dadurch gekennzeichnet, dass** es die folgenden Schritte aufweist:
- das wasserhaltige Abwasser, das eine bestimmte Quantität an organischen Stoffen enthält, wird in einen rohrförmigen Körper (18), der einen Eingang und einen Ausgang hat, eingespritzt bei anfänglichen Druck- und Temperaturbedingungen,
- das wasserhaltige Abwasser wird auf einen Druck P1 gebracht, der wenigstens dem kritischen Druck des wasserhaltigen Abwassers entspricht, wobei der Druck P1 größer als der anfängliche Druck ist,
- das wasserhaltige Abwasser wird auf eine Temperatur T1 gebracht, die größer als die anfängliche Temperatur ist, mittels Heizmitteln (38, 22), die in einer Zone des rohrförmigen Körpers angebracht sind,
und n Bruchteile wenigstens einer Oxidationszusammensetzung, deren Summe der Quantität an Oxidationszusammensetzung entspricht, die notwendig ist zur Oxidation der bestimmten Quantität von organischen Stoffen, werden in den rohrförmigen Körper an n Punkten (24, 30, 32), die im Abstand voneinander sind, eingespritzt, sodass ein Teil der thermischen Energie, die durch die Oxidationsreaktion produziert wird, die Temperatur des reaktiven Gemischs von der Temperatur T1 erhöht auf die Temperatur T2 > T1 gemäß einer ansteigenden Kurve (44, 46) zwischen der Zone des rohrförmigen Körpers und dem n-ten Einspritzpunkt, wodurch die organischen Stoffe oxidiert werden, wobei die reaktive Mischung sich kontinuierlich von einem unterkritischen Flüssigzustand in einen überkritischen Bereich bewegt.

2. Verfahren zur Oxidation gemäß Anspruch 1, **dadurch gekennzeichnet, dass** der Druck P1 des wasserhaltigen Abwassers größer als 23 MPa ist und dass die Temperatur T1 des Abwassers zwischen 370 und 520 °K liegt.

3. Verfahren zur Oxidation gemäß Anspruch 1 oder 2, **dadurch gekennzeichnet, dass** der Teil an thermischer Energie, die durch die Oxidationsreaktion produziert wird, die Temperatur des reaktiven Gemischs auf eine Temperatur T2 erhöht, die größer als 800°K ist.

4. Verfahren zur Oxidation gemäß irgendeinem der Ansprüche 1 bis 3, **dadurch gekennzeichnet, dass** drei Bruchteile einer Oxidationszusammensetzung in den rohrförmigen Körper an drei Punkten eingespritzt werden, die voneinander im Abstand sind.

5. Verfahren zur Oxidation gemäß irgendeinem der Ansprüche 1 bis 4, **dadurch gekennzeichnet, dass** der erste Bruchteil der Oxidationszusammensetzung eingespritzt wird, nachdem das wasserhaltige Abwasser die Temperatur T1 erreicht hat.

6. Verfahren zur Oxidation gemäß einem der Ansprüche 1 bis 5, **dadurch gekennzeichnet, dass** der rohrförmige Körper (18) eine Mehrzahl von Abschnitten hat, deren Querschnitte unterschiedliche Größe haben.

7. Verfahren zur Oxidation gemäß irgendeinem der Ansprüche 1 bis 6, **dadurch gekennzeichnet, dass** ferner ein Teil der thermischen Energie, die durch die Oxidation produziert wird, an das wasserhaltige Abwasser bei den anfänglichen Druck- und Temperaturbedingungen abgeben wird, um es auf die Temperatur T1 zu bringen.

8. Verfahren zur Oxidation gemäß irgendeinem der Ansprüche 1 bis 7, **dadurch gekennzeichnet, dass** die Einspritzung von n Bruchteilen an Oxidationszusammensetzung in den rohrförmigen Körper durchgeführt wird ohne Einspritzung eines Stoffs, der geeignet ist, das reaktive Milieu gleichzeitig zu kühlen.

9. Verfahren zur Oxidation gemäß irgendeinem der Ansprüche 1 bis 8, **dadurch gekennzeichnet, dass** die Oxidationszusammensetzung Sauerstoff ist.

10. Verfahren zur Oxidation gemäß irgendeinem der Ansprüche 1 bis 8, **dadurch gekennzeichnet, dass** die Oxidationszusammensetzung Wasserstoffperoxid ist.

11. Verfahren zur Oxidation gemäß irgendeinem der Ansprüche 1 bis 8, **dadurch gekennzeichnet, dass** wenigstens einer der Bruchteile an Oxidationszusammensetzung gebildet wird von einer Oxidationszusammensetzung eines Typs der von jenem der anderen Bruchteile verschieden ist.

12. Verfahren zur Oxidation gemäß irgendeinem der Ansprüche 1 bis 11, **dadurch gekennzeichnet, dass** es ferner die folgenden Schritte aufweist:
- das wasserhaltige Abwasser und die Salze, die es enthält, werden am Ausgang des rohrförmigen Körpers wiedergewonnen,
- der Druck des wasserhaltigen Abwassers wird abgesenkt von dem Druck P1 auf einen Druck P0, der zwischen Atmosphärendruck und dem Druck P1 liegt, sodass das wasserhaltige Abwasser entspannt wird zum Transformieren aller Salze in einen Festzustand und des wasserhaltigen Abwassers in einen Dampfzustand,
- die Salze werden im Festzustand wiedergewonnen, und
- das wasserhaltige Abwasser wird im Dampfzustand wiedergewonnen, wodurch das wasserhaltige Abwasser und die Salze, die es enthält, physikalisch getrennt werden.

## Claims

1. A process for the oxidation of organic substances present in an aqueous effluent, said aqueous effluent being capable of comprising salts, the process comprising the following stages:
- injecting said aqueous effluent having an initial pressure and temperature, and comprising a predetermined amount of organic substances, into a tubular body (18) having an inlet and an outlet;
- bringing said aqueous effluent to a pressure P1 corresponding at least to the critical pressure of said aqueous effluent, said pressure P1 being greater than the initial pressure;
- bringing said aqueous effluent to a temperature T1 greater than the initial temperature with heating means (38, 22) applied in a zone of said tubular body;
and injecting into said tubular body at n points (24, 30, 32) spaced apart from one another, n fractions of at least one oxidizing composition, whose sum corresponds to the amount of oxidizing composition necessary for the oxidation of said predetermined amount of organic substances, so that a portion of the thermal energy produced by the oxidation reaction increases the temperature of the reaction mixture from said temperature T1 to a temperature T2 which is greater than T1 according to an increasing curve (44, 46) between said zone of said tubular body and the n^{th} injection point, whereby said organic substances are oxidized, said reaction mixture continuously evolving from a subcritical liquid state to the supercritical region.

2. The oxidation process according to claim 1, wherein said pressure P1 of said aqueous effluent is greater than 23 MPa and the temperature T1 of said effluent is between 370 and 520 °K.

3. The oxidation process according to claim 1, wherein the portion of thermal energy produced by the oxidation reaction increases the temperature of said reaction mixture to a temperature T2 of less than 800°K.

4. The oxidation process according to any one of claims 1 to 3, wherein three fractions of an oxidizing composition are injected into said tubular body (18) at three points (24, 30, 32) spaced apart from one another.

5. The oxidation process according to any one of claims 1 to 4, wherein the first fraction of oxidizing composition is injected after said aqueous effluent has reached the temperature T1.

6. The oxidation process according to any one of claims 1 to 5, wherein said tubular body (18) exhibits a plurality of portions with cross sections of different sizes.

7. The oxidation process according to any one of claims 1 to 6, further comprising imparting a portion of the thermal energy produced by said oxidation is imparted to said aqueous effluent, taken under the initial pressure and temperature conditions, in order to bring it to said temperature T1.

8. The oxidation process according to any one of claims 1 to 7, wherein the injection of said n fractions of oxidizing composition is implemented without injecting a substance capable of simultaneously cooling the reaction medium.

9. The oxidation process according to any one of claims 1 to 8, wherein the oxidizing composition is oxygen.

10. The oxidation process according to any one of claims 1 to 8, wherein the oxidizing composition is hydrogen peroxide.

11. The oxidation process according to any one of claims 1 to 8, wherein at least one of the fractions of oxidizing composition is composed of an oxidizing composition which is different in nature from the other fractions.

12. The oxidation process according to any one of claims 1 to 11, further comprising the following stages:
- recovering said aqueous effluent and the salts present therein at the outlet of the tubular body;
- lowering the pressure of said aqueous effluent from said pressure P1 to a pressure P0, ranging between atmospheric pressure and said pressure P1, so as to convert all the salts to the solid state and said aqueous effluent to the vapor state;
- recovering the salts in the solid state; and
- recovering said aqueous effluent in the vapor state, whereby said aqueous effluent and the salts present therein are physically separated.
